(19) Europäisches Patentamt
European Patent Office
Office européen des brevets

(11) Veröffentlichungsnummer: **0 206 233**
**B1**

# (12) EUROPÄISCHE PATENTSCHRIFT

(45) Veröffentlichungstag der Patentschrift: **08.11.89**

(51) Int. Cl.⁴: **C 07 F 9/30**, C 07 F 9/48, B 03 D 1/02, B 01 F 17/42

(21) Anmeldenummer: **86108286.5**

(22) Anmeldetag: **18.06.86**

(54) **Phosphinsäureaddukte an Maleinsäurehalbester, Verfahren zu ihrer Herstellung und ihre Verwendung.**

(30) Priorität: **27.06.85 DE 3522930**

(43) Veröffentlichungstag der Anmeldung: **30.12.86 Patentblatt 86/52**

(45) Bekanntmachung des Hinweises auf die Patenterteilung: **08.11.89 Patentblatt 89/45**

(84) Benannte Vertragsstaaten: **AT BE CH DE FR GB IT LI NL SE**

(56) Entgegenhaltungen:
**US-A- 4 138 350**

**JOURNAL OF THE GENERAL CHEMISTRY OF THE USSR, Band 45, Nr. 2, Teil I, Februar 1975, Seite 300-302, Plenum Publishing Corp., New York, US; V.A. AL'FONSOV et al.: "Reaction of sodium hypophosphite with alkyl hydrogen maleates"**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Tesmann, Holger, Dr., Vennstrasse 61, D-4000 Düsseldorf 12 (DE)**
Erfinder: **Blum, Helmut, Bertha-von-Suttner-Strasse 30, D-4000 Düsseldorf 13 (DE)**
Erfinder: **Köster, Rita, Jasminweg 24, D-4040 Neuss (DE)**

**EP 0 206 233 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft Addukte von Phosphinsäure an Maleinsäurehalbester, ein Verfahren zur Herstellung derartiger Addukte und deren Verwendung als Flotationshilfsmittel.

Es sind zahlreiche verfahren zur Anreicherung nichtsulfidischer Wertminerale aus zerkleinerten Roherzen durch Flotation bekannt. Solche Wertminerale sind beispielsweise Apatit, Fluorit, Scheelit und andere salzartige Mineralien, Cassiterit und andere Schwermetalloxide, z.B. die des Titans und Zirkons, sowie bestimmte Silikate und Alumosilikate, die in Gegenwart von Sammlern flotiert werden. Nach «Ullmanns Enzyklopädie der technischen Chemie», Verlag Chemie, Weinheim (1972), Band 2, Seite 115 sind Sammler organische Verbindungen, die an einer mehr oder weniger langen Kohlenwasserstoffkette im allgemeinen eine chemisch aktive polare Gruppe tragen. Als Sammler werden vielfach Fettsäuren, insbesondere ungesättigte Fettsäuren, bevorzugt Ölsäure, verwendet. Andere geeignete Sammler sind beispielsweise Sulfonattenside (wie Alkylarylsulfonate) oder Alkyl- bzw. Arylphosphonate.

In den US-PSen 4 138 350 und 4 139 482 werden Sulfobernsteinsäure-Monoalkylester und Sulfobernsteinsäure-aspartate als Sammler vorgeschlagen. Derartige Sammler auf Basis von Fettsäuren oder Sulfonaten sind jedoch vergleichsweise unselektiv, da sie sich auch zur Flotation von silikatischen und carbonatischen Mineralien eignen und daher nur beschränkt brauchbar sind, wenn derartige Mineralien als Begleitstoffe neben anderen Wertmaterialien vorkommen und von diesen abgetrennt werden sollen. Es bedarf daher des Zusatzes weiterer Hilfsmittel, beispielsweise sogenannter «Drücker», um die Flotation unerwünschter Gangarten zu verhindern. Die entstehenden Reagenziengemische zur Flotation weisen eine sehr komplizierte Zusammensetzung auf. Die selektive Flotation von nichtsulfidischen Wertmineralen in Gegenwart von Calcit als Gangart stellt ein besonderes technisches Problem dar, für das Fettsäuren bzw. Sulfogruppen enthaltende Sammler in der Praxis nicht hinreichend geeignet sind.

In der EP-A 0 067 137 werden mit acylierten Alkylenoxiden veresterte Dicarbonsäurehalbester, beispielsweise mit Fettsäure acylierten Alkylenoxiden veresterte Maleinsäurehalbester und ihre Verwendung als Sammler für die Flotation von oxidischen oder salzartigen Mineralien beschrieben. Der Nachteil dieser Verbindungen besteht jedoch darin, daß sie ebenfalls nicht mit einer für die Praxis befriedigenden Selektivität wirken und daher die zusätzliche Verwendung weiterer modifizierender Reagenzien erforderlich machen.

In Journal of the General Chemistry of the USSR, Band 45, Nr. 2, Teil I, Februar 1975, Seiten 300-302 sind Hydroxyphosphinylbernsteinsäuremonoester von Alkanolen mit 10 bis 18 Kohlenstoffatomen beschrieben. Es wird erwähnt, daß diese Verbindungen oberflächenaktive Eigenschaften besitzen und daß sie in der Erzflotation eingesetzt werden können.

Die vorliegende Erfindung machte sich zur Aufgabe, neue und präparativ einfach zugängliche Verbindungen zur Verfügung zu stellen, die eine gute Wasserlöslichkeit aufweisen und sich als selektive Sammler bei der Flotation nichtsulfidischer Wertminerale eignen.

Es wurde überraschend gefunden, daß Umsetzungsprodukte von Phosphinsäure mit bestimmten Maleinsäurehalbestern auf der Basis von Alkyl- bzw. Alkylphenolpolyglykolethern und deren wasserlösliche Salze besonders gute Sammlereigenschaften für nichtsulfidische Wertminerale aufweisen. Die Erfindung betrifft daher Addukte von Phosphinsäure an Maleinsäurehalbester und deren Salze der allgemeine Formel (I)

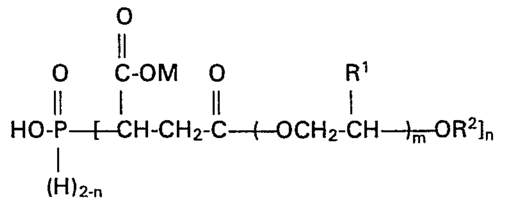

(I)

in der

$R^1$ für Wasserstoff oder einen Methylrest,

$R^2$ für einen linearen oder verzweigten, gegebenenfalls durch eine Hydroxylgruppe substituierten aliphatischen oder cycloaliphatischen Alkylrest mit 8 bis 18 C-Atomen oder für einen Arylrest der Formel

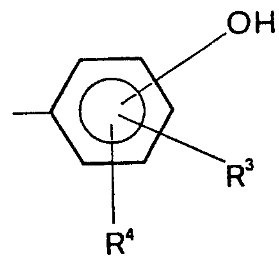

in der

$R^3$ und $R^4$ gleich oder verschieden sein können und einzeln oder gemeinsam für Wasserstoff oder einen linearen oder verzweigten Alkylrest mit 7 bis 12 C-Atomen stehen und

M für H, Na, K oder $NH_4$ stehen können und

m eine ganze Zahl im bereich von 1 bis 8 und

n 1 oder 2 bedeuten.

Die Erfindung betrifft außerdem ein Verfahren zur Herstellung derartiger Addukte von Phosphinsäure an Maleinsäurehalbester sowie von deren Salzen der oben angegebenen allgemeinen Formel (I), in der $R^1$, $R^2$, $R^3$, $R^4$, M, m und n die oben angegebenen Bedeutungen haben, das dadurch gekennzeichnet ist, daß man Verbindungen der allgemeinen Formel $R^2OH$ im Molverhältnis 1 : m mit einem Epoxid der Formel

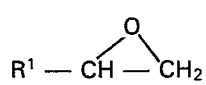

umsetzt, die entstehenden Alkyl- oder Alkylphenolpolyglykolether mit Maleinsäureanhydrid im Molverhältnis 1:1 zu Maleinsäurehalbestern umsetzt und diese gegebenenfalls in die entsprechenden Natrium-, Kalium- oder Ammoniumsalze überführt und an die resultierenden Verbindungen Phosphinsäure im Molverhältnis Ester : Phosphinsäure von 1 bis 2 : 1 addiert, wobei Addukte der allgemeinen Formel (I) entstehen.

Die Erfindung betrifft außerdem die Verwendung der oben beschriebenen Addukte der allgemeinen Formel (I), in der $R^1$, $R^2$, $R^3$, $R^4$, M, m und n die oben angegebenen Bedeutungen haben, in Mengen von 10 bis 5000 g/t Erz als Sammler für die Flotation nichtsulfidischer Wertminerale.

Die Addukte von Phosphinsäure, die mit Hypophosphoriger Säure tautomer ist, an Maleinsäurehalbester können entweder Monoaddukte, d.h. Addukte eines Phosphinsäuremoleküls an die Doppelbindung eines Maleinsäurehalbester-Moleküls, oder Diaddukte, d.h. Addukte eines Phosphinsäuremoleküls an die Doppelbindungen zweier Maleinsäurehalbester-Moleküle oder auch deren Gemische sein. Bei herstellung der Addukte im halbtechnischen oder technischen Maßstab fallen in der Regel Gemische von 1:1- und 1:2-Addukten an, die entweder nach an sich bekannten Methoden voneinander getrennt oder auch in Form ihrer Gemische als Sammler für die Flotation nichtsulfidischer Wertminerale eingesetzt werden können.

Die erfindungegemäßen Addukte der allgemeinen Formel (I) können als Reste $R^2$ lineare oder verzweigte, gegebenenfalls durch eine Hydroxylgruppe substituierte aliphatische oder cycloaliphatische Alkylreste mit 8 bis 18 C-Atomen enthalten. Beispiele solcher Reste sind Reste der natürlich vorkommenden Fettalkohole, die in der Regel eine gerade Zahl von C-Atomen aufweisen. Als solche sind Octanol, Decanol, Dodecanol, Tetradecanol usw. zu nennen. Es können jedoch auch Alkohole mit verzweigten Alkylketten oder mit einer ungeraden Zahl von C-Atomen in Frage kommen. Bevorzugt steht der Rest $R^2$ für einen linearen Alkylrest mit 12 bis 16 C-Atomen.

$R^2$ kann jedoch auch für Arylreste der allgemeinen Formel

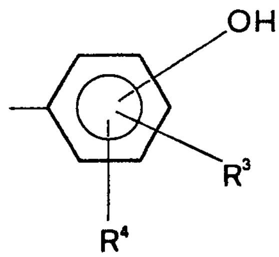

stehen, in der entweder $R_3$ Wasserstoff und $R^4$ einen Alkylrest mit 7 bis 12 C-Atomen bedeuten kann oder beide Reste $R^3$ und $R^4$ für Alkylreste mit 7 bis 12 C-Atomen stehen. Vorzugsweise weisen die Alkylreste $R^3$ und/oder $R^4$ eine Zahl von C-Atomen im Bereich von 8 bis 12 auf.

bevorzugt steht in der allgemeinen Formel (I) der Rest $R^2$ für einen linearen Decyl- oder einen Dodecylrest. Es sind jedoch auch Gemische von Verbindungen der allgemeinen Formel (I) im technischen Bereich herstellbar, in denen der allgemeine Rest $R^2$ für Alkylreste eines technischen Fettalkoholgemisches mit beispielsweise 10 bis 18 C-Atomen steht.

Die erfindungsgemäßen Addukte weisen in ihrem Maleinsäurehalbester-Molekülteil Estergruppierungen auf, die 1 bis 8 Ethoxy- oder Propoxygruppen neben der eben erwähnten Alkoxygruppierung aufweisen. Dabei ist eine Zahl von 2 bis 4 Glykolethergruppierungen bevorzugt. Mit Vorteil sind die entsprechenden Gruppierungen durch Ethoxylieren der entsprechenden Fettalkohole bzw. Fettalkoholmischungen entstanden, wobei vorzugsweise 2 bis 4 Mol Ethylenoxid pro Mol Alkohol vorkommen.

Die Herstellung der erfindungsgemäßen Addukte von Phosphinsäure an Maleinsäurehalbester erfolgt entsprechend dem nachfolgenden Reaktionsschema.

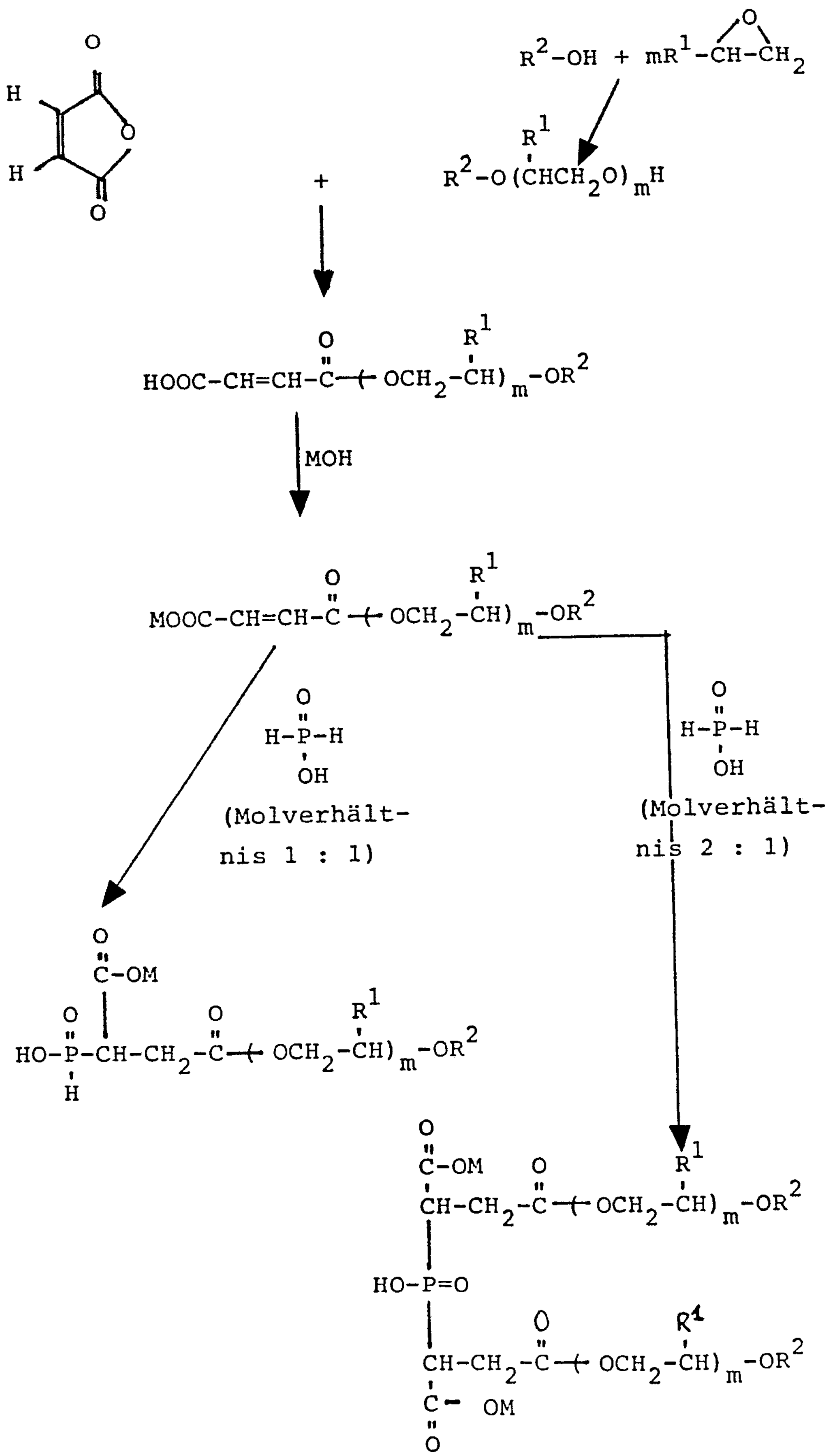
MOH
(Molverhältnis 1 : 1)
(Molverhältnis 2 : 1)

Alkohole oder Alkylphenole der allgemeinen Formel $R^2OH$ werden also mit Ethylenoxid oder Propylenoxid im Molverhältnis 1 : 1 bis 8 zu Alkyl- oder Alkylphenolpolyglykolethern umgesetzt, wobei ein Molverhältnis Alkohol : Ethylenoxid bzw. Propylenoxid von 1 : 2 bis 4 bevorzugt wird. Mit Vorteil wird für die Alkoxylierungsreaktion Ethylenoxid eingesetzt.

Die entstehenden Alkyl- oder Alkylphenolpolyglykolether werden mit Maleinsäureanhydrid im Molverhältnis 1 : 1 zu den entsprechenden Maleinsäurehalbestern umgesetzt. Dieser Reaktion, die bei an sich für eine Veresterungsreaktion bekannten Reaktionsbedingungen abläuft, folgt gegebenenfalls eine Neutralisation der freien Carboxylgruppe mit basischen Reaktionspartnern, beispielsweise wäßrigen Alkalimetall- oder Ammoniumhydroxid- oder Carbonat-Lösungen.

Die entstandenen neutralisierten Maleinsäurehalbester werden in inerter Atmosphäre bei erhöhter Temperatur mit Hypophosphoriger Säure (Phosphinsäure) im Molverhältnis 1 : 1 bzw. 2 : 1 zur Reaktion gebracht. Die Reaktion wird bevorzugt unter Stickstoff als Inertgas bei einer Reaktionstemperatur von 90 bis 130°C (Sumpftemperatur) durchgeführt. Zur Initiierung der Additionsreaktion wird dem Reaktionsgemisch ein anorganischer oder organischer Radikalbildner in unterstöchiometrischen Mengen zugegeben, Vorzugsweise wird eine wässrige Lösung von Alkalimetallperoxodisulfat, insbesondere Natriumperoxodisulfat, zugesetzt. Auf diesem Wege entsteht ein gemisch des Mono- und Diaddukte der Phosphinsäure an den eingesetzten Maleinsäurehalbestern. Das Gemisch kann in seine Einzelkomponenten auf an sich bekannten Wegen getrennt, vorzugsweise jedoch als solches als Sammler für die Flotation nichtsulfidischer Wertminerale eingesetzt werden.

Die erfindungsgemäßen neuen Addukte und deren wasserlösliche Salze, die bei dem oben beschriebenen Verfahren als flüssige bis duckflüssige Produkte in Form wässriger Mischungen mit Aktivsubstanzgehalten von 70 bis 90% anfallen und ohne Erwärmen in Wasser ausgezeichnet löslich sind, können ohne weitere Sammlerzusätze als Sammler in der Flotation eingesetzt werden. Dabei werden wässrige Lösungen zur Flotation verwendet, die 10 bis 5000 g/t Erz, bevorzugt 100 bis 3000 g/t Erz der neuen Addukte von Phosphinsäure an Maleinsäurehalbester enthalten. Schon die alleinige Verwendung der erfindungsgemäßen Verbindungen als Sammler führt zu einer deutlichen Verbesserung der Selektivität im Wertmineralaustrag gegenüber den aus dem Stand der Technik bekannten Sammlern, beispielsweise den erwähnten Fettsäuren oder sulfonierten Maleinsäurehalbestern.

Die erfindungsgemäßen Verbindungen können jedoch zur weiteren verbesserung des Ausbringens sowie der metallurgischen Ergebnisse auch in Kombination mit sogenannten Co-Sammlern verwendet werden. Derartige Co-Sammler sind aus dem Stand der Technik bekannte Sammler für die Flotation aus der Gruppe der anionischen Tenside. Als Beispiele solcher Co-Sammler sind Fettsäuren oder deren Derivate, Sulfonierungsprodukte von fetten Ölen oder Alkylbenzolen, Sulfobernsteinsäureester bzw. -amide, Alkyletherphosphate, Alkylethersulfate und vergleichbare Verbindungen zu nennen, wobei für jeden beliebigen Mineraltyp eine eigene optimierte Kombination verwendet werden kann, die der Fachmann anhand weniger orientierenden Vorversuche herauszufinden imstande ist.

Weiterhin können in der praktischen Anwendung je nach Aufbereitungsproblem bzw. Anlagen-erfordernissen dem Flotationsmedium weitere Verbindungen zugesetzt werden. Als solche kommen pH-Regler, anorganische und organische Drücker sowie weitere, an sich bekannte Zusätze wie beispielsweise Schäumer, in Frage. Auf diesem Wege läßt sich das Ausbringen des gewünschten Wertminerals unter Verwendung der erfindungsgemäßen Maleinsäurehalbester-Phosphinsäure-Addukte noch weiter verbessern. Dies kommt insbesondere dann zum Tragen, wenn das Trennproblem darin besteht, relativ wertarme Erze in Wertmineral und Gangart aufzutrennen.

Die Erfindung wird durch die nachfolgenden Beispiele näher erläutert.

*Beispiel 1*

Herstellung der erfindungsgemäßen Addukte von Phosphinsäure an Maleinsäurehalbester.

(a) Ein technisches Fettalkoholgemisch, das Alkohole mit 12 bis 16 C-Atomen im Alkylrest aufwies, wurde mit vier Äquivalenten Ethylenoxid zum entsprechenden Alkylpolyglykolether umgesetzt. Die Umsetzung mit Maleinsäureanhydrid im Molverhältnis 1 : 1 lieferte den entsprechenden Maleinsäurehalbester [Formel (I); $R^1$ = H; $R^2$ = $C_{12}$-$C_{16}$-Alkyl; m = 4].

0,5 Mol dieses Ausgangshalbesters wurden unter Stickstoff auf 90°C erwärmt und dann 33 g (0,5 Mol) Hypophosphorige Säure in Form einer 50%igen wässrigen Lösung zugetropft. Bei gleicher Temperatur wurde eine 12%ige wässrige Lösung von 15 g (63,0 mMol) Natriumperoxidisulfat tropfenweise zugegeben. Die Mischung wurde dann 2 h auf 100°C und danach weiter bis zu einer Sumpftemperatur von 130°C erhitzt. Dabei wurden ca. 100 ml Wasser abdestilliert, wonach ein homogenes, dickflüssiges Produkt erhalten wurde, das nach $^{31}P$-NMR-spektroskopischen Befunden Mono- bzw. Diaddukt der Hypophosphorigen Säure an den Ausgangs-Maleinsäurehalbester [Formel (I); n = 1 bzw. 2] enthielt.

(b) Zur herstellung eines weiteren Adduktgemisches diente als Ausgangsmaterial ein Maleinsäurehalbester, dessen Alkoholkomponente aus einem Anlagerungsprodukt von 4 Mol Ethylenoxid an ein technisches Gemisch von Fettalkoholen mit 10 bis 18 C-Atomen (0 bis 3% $C_{10}$; 48 bis 58 $C_{12}$; 19 bis 24% $C_{14}$; 9 bis 12% $C_{16}$ und 10 bis 14% $C_{18}$) erhalten worden war. Der Halbester war durch Umsetzung der Alkoholkomponente mit Maleinsäureanhydrid im Molverhältnis 1 : 1 erhalten worden.

145,2 g (0,6 Mol) dieses Maleinsäurehalbester-Gemisches wurden unter Stickstoff auf 90°C erwärmt, bevor langsam 39,6 g (0,6 Mol) unterphosphorige Säure in Form einer 50%igen wässrigen Lösung zugegeben wurden. Anschließend wurde bei gleicher Temperatur eine Lösung aus 9 g (37,8 mMol) Natriumperoxodisulfat in 60 ml Wasser zugetropft. Die Reaktionsmischung wurde dann 2 h lang auf 100°C und danach unter Abdestillieren von 70 ml Wasser bis zu einer Sumpftemperatur von 130°C erhitzt. Das auf diese Weise erhaltene Reaktionsprodukt enthielt 5,2 Gew.-% Phosphor.

Nach $^{31}P$-NMR-spektroskopischen Befunden enthielt das Reaktionsprodukt, bezogen auf die eingesetzte Menge unterphosphoriger Säure, 25 bis 30% des eingesetzten Phosphors als Monoaddukt [Formel (I); n = 1] ($\delta_P$ = 29,13 ppm) und 10 bis 15% des eingesetzten Phosphors als Diaddukt [Formel (I); n = 2] ($\delta_P$ = 36,71 ppm). Außerdem wurden nicht umgesetzte Hypophosphorige Säure ($\delta_P$ = 7,74 ppm) und durch Oxidation gebildete phosphorige Säure ($\delta_P$ = 4,93 ppm) nachgewiesen, auf die der restliche Phosphoranteil im Reaktionsprodukt entfiel.

*Beispiel 2*

Flotation unter Verwendung der erfindungsgemäßen Adduktgemische.

Die für die Flotationsversuche verwendete Anordnung bestand aus einer modifizierten «Hallimond-Röhre» nach den Angaben von B. Dobias in «Colloid and Polymer Sci. 259, 775 bis 776 (1981)», die ein Volumen von 160 ml aufwies. Die Apparatur wurde mit 1,5 g eines gemahlenen Erzes (siehe unten) und einer Lösung des Sammlers (28 mg/l Aktivsubstanz, entsprechend 3000 g/t) beschickt. Durch das Flotationsmedium wurde ein Wertmineral-Konzentrat ausgetragen, das in Abhängigkeit von der Zeit untersucht wurde.

Die Mineralprobe bestand aus Apatit einer sedimentären Lagerstätte mit hohem Gehalt an Calcit als Gangart, bei dem die folgenden Bestandteile quantitativ bestimmt wurden:

23,5% $P_2O_5$
53,0% CaO
16,3% $CO_2$
2,5% $F^-$
1,9% $SiO_2$

Die Flotationsaufgabe wies folgende Korngrößenverteilung (nach Entschlämmung) auf:

16,9% $\leqq$ 25 µm;
29,7% = 25 bis 80 µm;
35,2% = 80 bis 140 µm und
18,2% $\geqq$ 140 µm.

Der pH-Wert der Flotationslösung betrug 9,5, wobei die phosphinylierten Maleinsäurehalbester als Natriumsalz vorlagen. In Beispiel 2a wurde eine erfindungsgemäße Verbindung der allgemeinen Formel (I) mit $R^2$ = Alkylrest mit 12 bis 14 C-Atomen, in Beispiel 2b eine erfindungsgemäße Verbindung der allgemeinen Formel (I) mit $R^2$ = Alkylrest mit 12 bis 16 C-Atomen eingesetzt. Als Sammler wurden jeweils Gemische der Mono- und Diaddukte [Formel (I); n = 1 bzw. 2] verwendet. Die Sammlerkonzentration betrug in beiden Fällen 3000 g Aktivsubstanz pro Tonne Erz. Die Ergebnisse sind in der nachfolgenden Tabelle I zusammengestellt.

TABELLE 1

| Beispiel | Flotationszeit (min) | a*) (%) | b*) (%) |
|---|---|---|---|
| 2a | 2 | 49 | 25 |
| | 5 | 77 | 25 |
| | 12 | 98 | 22 |
| 2b | 2 | 57 | 25 |
| | 5 | 80 | 26 |
| | 12 | 86 | 23 |

*) Erläuterungen:
a): Metallausbringen (in Gew.-%, bezogen auf die Aufgabe)
b): $P_2O_5$-Gehalt des ausgebrachten Konzentrats.

*Ergebnis:* Schon nach kurzer Flotationszeit wurde ein hoher Anteil des Phosphaterzes ausgebracht, wobei mit fortschreitender Laufzeit der Flotation der Phosphatgehalt der Erzprobe abnahm. Gegen Ende der Flotation verarmte auch das ausgebrachte Konzentrat an Phosphat.

*Vergleichsbeispiele 1 bis 3*

Unter vergleichbaren Reaktionsbedingungen wurden zum Vergleich Flotationsversuche durchgeführt, in denen Natriumoleat (Vergleichsbeispiel 1) ein direktes Umsetzungsprodukt von Maleinsäure mit unterphosphoriger Säure (Vergleichsbeispiel 2) und ein nichtphosphinylierter Maleinsäurehalbester (Vergleichsbeispiel 3) eingesetzt wurden, der dem in Beispiel 2a verwendeten Maleinsäurehalbester entsprach. Die Konzentration an Sammler betrug jeweils 3000 g Aktivsubstanz pro Tonne Erz.

Die Ergebnisse sind der nachfolgenden Tabelle 2 zu entnehmen.

TABELLE 2

| Vergleichs-beispiel | Flotationszeit (min) | a*) (%) | b*) (%) |
|---|---|---|---|
| $V_1$ | 2 | 7 | 18 |
| | 5 | 21 | 20 |
| | 12 | 45 | 22 |
| $V_2$ | 2 | keine Flotation | |
| | 5 | | |
| | 12 | | |
| $V_3$ | 2 | 27 | 19 |
| | 5 | 53 | 29 |
| | 12 | 71 | 31 |

*) Erläuterungen:
a): Metallausbringen (in Gew.-%, bezogen auf die Aufgabe)
b): $P_2O_5$-Gehalt des ausgebrachten Konzentrats.

*Ergebnis:*

Die Sammler in den Vergleichsversuchen $V_1$ und $V_3$ sind erheblich weniger leistungsfähig als die erfindungsgemäß verwendeten Produkte der allgemeinen Formel (I). Insbesondere im Vergleichsversuch $V_3$ zeigt sich, daß erst durch die Umsetzung der Maleinsäurehalbester mit unterphosphoriger Säure Produkte erhalten werden, mit denen sich die Sammlereigenschaften gezielt verbessern lassen, da die Maleinsäurehalbester, die zur Herstellung der erfindungsgemäßen Verbindungen der allgemeinen Formel (I) verwendet wurden, nach zweiminütiger Flotationszeit in der ersten Flotationsstufe bevorzugt Calcit flotieren.

Das im Vergleichsversuch $V_2$ eingesetzte Maleinsäure-Phosphorigsäure-Umsetzungsprodukt weist gar keine Sammlereigenschaften auf.

*Beispiel 3*

In einer Labor-Flotationszelle (Modell MN 935/4 der Firma Klöckner-Humboldt-Deutz) mit einem Fassungsvermögen von 1 l wurde ein wertarmes Cassiterit-Erz bei 20°C flotiert. Als Sammler wurde ein phosphinylierter Maleinsäurehalbester der allgemeinen Formel (I) mit $R^1$ = Alkylrest mit 12 bis 14 C-Atomen (Beispiel 3a) und $R^2$ = Alkylrest mit 12 bis 16 C-Atomen (Beispiel 3b) in einer Menge von 300 g Aktivsubstanz pro Tonne Erz eingesetzt. Als Gangart enthielt das Cassiterit-Erz im wesentlichen Granit, Turmalin und Magnetit. Durch Analyse wurde folgende Zusammensetzung des aufgegebenen Erzes bestimmt:

1,0% $SnO_2$
58,8% $SiO_2$
7,1% $Fe_2O_3$

Die Korngrößenverteilung der Flotationsaufgabe war die folgende:

60% $\leqq$ 25 µm und
40% = 25 bis 100 µm.

Als Drücker wurde Wasserglas in einer Menge von 2200 g/t Erz zugesetzt und der pH-Wert der Trübe mit Schwefelsäure auf 5 eingestellt.

Die Ergebnisse sind in Tabelle 3 aufgeführt.

*Vergleichsbeispiele 4 und 5*

Als Vergleichssubstanzen wurden die entsprechenden nichtphosphinylierten Maleinsäurehalbester eingesetzt, die in den Beispielen 3a und 3b zur Herstellung der erfindungsgemäßen Verbindungen der allgemeinen Formel (I) verwendet worden waren.

Die Menge an Vergleichssubstanz betrug im Vergleichsbeispiel 4 und im Vergleichsbeispiel 5 300 g/t Erz.

Die Ergebnisse sind mit denen des Beispiels 3 in der nachfolgenden Tabelle 3 aufgeführt.

TABELLE 3

| Beispiel bzw. Vergleichsbeispiel (V) | a*) (%) | b*) (%) |
|---|---|---|
| 3a | 91 | 4,2 |
| 3b | 82 | 4,8 |
| $V_4$ | 96 | 2,5 |
| $V_5$ | 94 | 2,5 |

*) Erläuterungen:
a): Metallausbringen (in Gew.-%, bezogen auf die Aufgabe)
b): $SnO_2$-Gehalt des ausgebrachten Konzentrats.

*Ergebnis:*
Wie Tabelle 3 zeigt, weisen die erfindungsgemäßen Verbindungen der allgemeinen Formel (I) (Beispiel 3) bei vergleichbarem Ausbringen des Wertminerals eine deutlich höhere Selektivität auf als die entsprechenden Maleinsäurehalbester, die zur Herstellung der phosphonylierten Maleinsäurehalbester der allgemeinen Formel (I) verwendet wurden.

**Patentansprüche**

1. Addukte von Phosphinsäure an Maleinsäurehalbester und deren Salze der allgemeinen Formel (I)

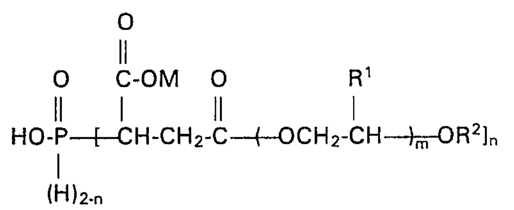 (I)

in der

$R^1$ für Wasserstoff oder einen Methylrest,
$R^2$ für einen linearen oder verzweigten, gegebenenfalls durch eine Hydroxylgruppe substituierten aliphatischen oder cycloaliphatischen Alkylrest mit 8 bis 18 C-Atomen oder für einen Arylrest der Formel

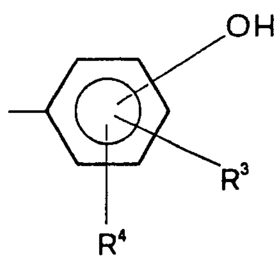

in der

$R^3$ und $R^4$ gleich oder verschieden sein können und einzeln oder gemeinsam für Wasserstoff oder einen linearen oder verzweigten Alkylrest mit 7 bis 12 C-Atomen stehen und
M für H, Na, K oder $NH_4$ stehen können und
m eine ganze Zahl im Bereich von 1 bis 8 und
n 1 oder 2 bedeuten.

2. Addukte der allgemeinen Formel (I), in der $R_1$ für Wasserstoff, $R^2$ für einen linearen aliphatischen Alkylrest mit 12 bis 16 C-Atomen, M für Na, K oder $NH_4$ stehen kann, m für eine ganze Zahl im Bereich von 2 bis 4 steht und n 1 oder 2 bedeuten.

3. Gemische von Addukten der allgemeinen Formel (I) nach Ansprüchen 1 oder 2, für die n die Bedeutung 1 oder 2 hat.

4. Verfahren zur Herstellung von Addukten von Phosphinsäure an Maleinsäurehalbestern und deren Salze der allgemeinen Formel (I)

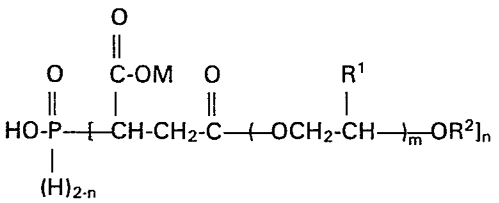 (I)

in der

$R^1$ für Wasserstoff oder einen Methylrest,
$R^2$ für einen linearen oder verzweigten, gegebenenfalls durch eine Hydroxylgruppe substituierten aliphatischen oder cycloaliphatischen Alkylrest mit 8 bis 18 C-Atomen oder für einen Arylrest der Formel

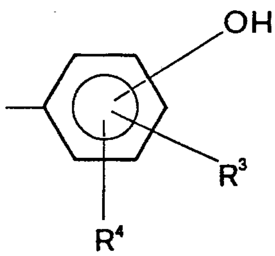

in der

$R^3$ und $R^4$ gleich oder verschieden sein können und einzeln oder gemeinsam für Wasserstoff oder einen linearen oder verzweigten Alkylrest mit 7 bis 12 C-Atomen stehen und
M für H, Na, K oder $NH_4$ stehen können und
m eine ganze Zahl im Bereich von 1 bis 8 und
n 1 oder 2 bedeuten.

dadurch gekennzeichnet, daß man

(a) Verbindungen der allgemeinen Formel

$R^2OH$

im Molverhältnis 1 : m mit einem Epoxid der Formel

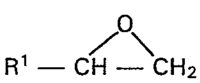

umsetzt,

(b) die entstehenden Alkyl- oder Alkylphenolpolyglykolether mit Maleinsäureanhydrid im Molverhältnis 1 : 1 zu Maleinsäurehalbestern umsetzt und diese gegebenenfalls in die entsprechenden Natrium-, Kalium- oder Ammoniumsalze überführt, und

(c) an die resultierenden Verbindungen Phosphinsäure im Molverhältnis Ester : Phosphinsäure von 1 bis 2 : 1 addiert, wobei Addukte der allgemeinen Formel (I) oder deren Gemische entstehen, und

(d) die entstehenden Adduktgemische gegebenenfalls nach an sich bekannten Methoden in ihre Einzelkomponenten trennt.

5. Verfahren nach Anspruch 4, dadurch gekennzeichnet, daß man

(a) Verbindungen der allgemeinen Formel

$R^2OH$

verwendet, in denen $R^2$ für Alkylreste mit 12 bis 16 C-Atomen steht und diese im Molverhältnis 1 : 2 bis 4 mit Ethylenoxid umsetzt,
(b) die entstehenden Alkylpolyglykolether mit Maleinsäureanhydrid im Molverhältnis 1 : 1 in zu Maleinsäurehalbestern umsetzt und
(c) an die resultierenden Verbindungen Phosphinsäure im Molverhältnis Ester : Phosphinsäure von 1 : 1 addiert.

6. Verwendung von Addukten von Phosphinsäure an Maleinsäurehalbester und deren Salze der allgemeinen Formel (I)

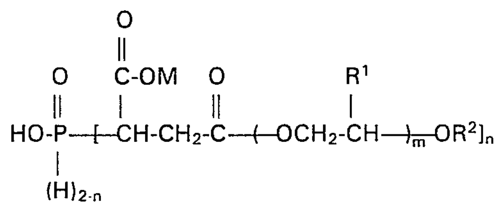 (I)

in der

$R^1$ für Wasserstoff oder einen Methylrest,
$R^2$ für einen linearen oder verzweigten, gegebenenfalls durch eine Hydroxylgruppe substituierten aliphatischen oder cycloaliphatischen Alkylrest mit 8 bis 18 C-Atomen oder für einen Arylrest der Formel

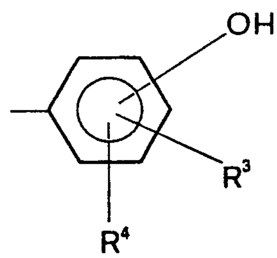

in der

$R^3$ und $R^4$ gleich oder verschieden sein können und einzeln oder gemeinsam für Wasserstoff oder einen linearen oder verzweigten Alkylrest mit 7 bis 12 C-Atomen stehen und
M für H, Na, K oder $NH_4$ stehen können und
m eine ganze Zahl im Bereich von 1 bis 8 und
n 1 oder 2 bedeuten,

allein oder unter Zusatz weiterer, an sich für die Flotation nichtsulfidischer Wertmineralien bekannter Zusätze als Sammler für die Flotation nichtsulfidischer Wertmineralien.

7. Verwendung nach Anspruch 6, dadurch gekennzeichnet, daß in der allgemeinen Formel (I) $R^1$ für Wasserstoff, $R_2$ für einen linearen aliphatischen Alkylrest mit 12 bis 16 C-Atomen, M für Na, K oder $NH_4$ stehen kann, m für eine ganze Zahl im Bereich von 2 bis 4 steht und n 1 oder 2 bedeutet.

8. Verwendung nach den Ansprüchen 6 und 7, dadurch gekennzeichnet, daß Gemische von Addukten der Formel (I) eingesetzt werden, für die n die Bedeutung 1 oder 2 hat.

**Claims**

1. Adducts of phosphinic acid with maleic acid semiesters and salts thereof corresponding to general formula (I)

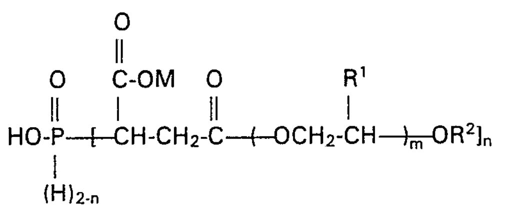 (I)

in which

$R^1$ is hydrogen or a methyl radical,
$R^2$ is a linear or branched, aliphatic or cycloaliphatic $C_{8-18}$ alkyl radical optionally substituted by a hydroxyl group or an aryl radical corresponding to the following formula

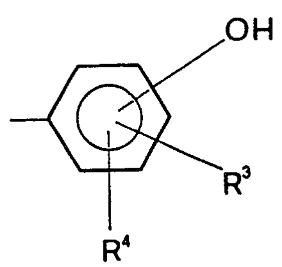

in which

$R^3$ and $R^4$ may be the same or different and, individually or together, represent hydrogen or a linear or branched $C_{7-12}$ alkyl radical,
and
M may be H, Na, K or $NH_4$,
m is an integer of from 1 to 8 and
n is the number 1 or 2.

2. Adducts corresponding to general formula (I), in which $R^1$ is hydrogen, $R^2$ is a linear, aliphatic $C_{12-16}$ alkyl radical, M may be Na, K or $NH_4$, m is an integer in the range from 2 to 4 and n is the number 1 or 2.

3. Mixtures of the adducts of general formula (I) claimed in claim 1 or 2, in which n is the number 1 or 2.

4. A process for the production of adduct of phosphinic acid with maleic acid semiesters and salts thereof corresponding to general formula (I)

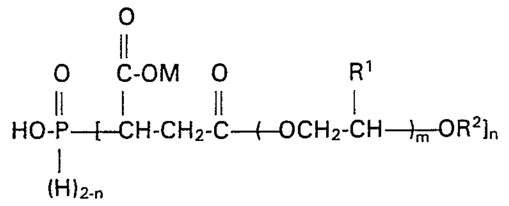 (I)

in which

$R^1$ is hydrogen or a methyl radical,
$R^2$ is a linear or branched, aliphatic or cycloaliphatic $C_{8-18}$ alkyl radical optionally substituted by a hydroxyl group or an aryl radical corresponding to the following formula

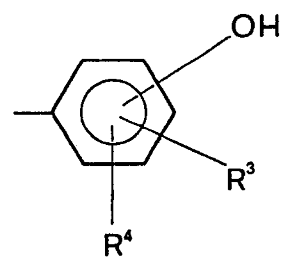

in which

$R^3$ and $R^4$ may be the same or different and, individually or together, represent hydrogen or a linear or branched $C_{7-12}$ alkyl radical,
and
M may be H, Na, K or $NH_4$,
m is an integer of from 1 to 8 and
n is the number 1 or 2.

characterized in that

(a) compounds corresponding to the following general formula

$R^2OH$

are reacted with an epoxide corresponding to the following formula

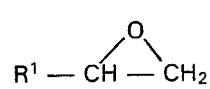

in a molar ratio of 1 : m
(b) the alkyl or alkyl phenol polyglykol ethers formed are reacted with maleic anhydride in a molar ratio of 1 : 1 to form maleic acid semiesters and the semiesters thus formed are optionally converted into the corresponding sodium, potassium or ammonium salts,
(c) phosphinic acid is added onto the resulting compounds in a molar ratio of ester to phosphinic acid of from 1 to 2 : 1, adducts corresponding to general formula (I) or mixtures thereof being formed, and
(d) the adduct mixtures formed are optionally separated into their individual components by methods known per se.

5. A process as claimed in claim 4, characterized in that

(a) compounds corresponding to the following general formula

$R^2OH$

in which $R^2$ represents $C_{12-16}$ alkyl radicals, are used and reacted with ethylene oxide in a molar ratio of 1 : 2 to 4,

(b) the alkyl polyglycol ethers formed are reacted with maleic anhydride in a molar ratio of 1 : 1 to form maleic acid semiesters and

(c) phosphinic acid is added onto the resulting compounds in a molar ratio of esters to phosphinic acid of 1 : 1.

6. The use of adducts of phosphinic acid with maleic acid semiesters and salts thereof corresponding to general formula (I)

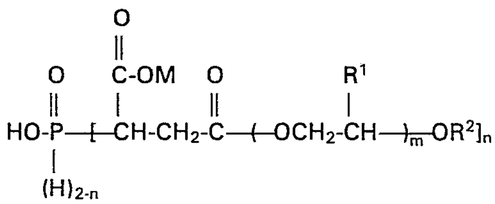 (I)

in which

$R^1$ is hydrogen or a methyl radical,

$R^2$ is a linear or branched, aliphatic or cycloaliphatic $C_{8-18}$ alkyl radical optionally substituted by a hydroxyl group or an aryl radical corresponding to the following formula

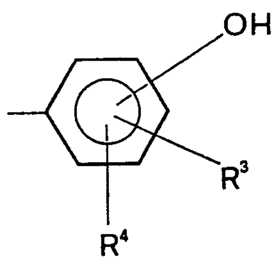

in which

$R^3$ and $R^4$ may be the same or different and, individually or together, represent hydrogen or a linear or branched $C_{7-12}$ alkyl radical,

and

M may be H, Na, K or $NH_4$,

m is an integer of from 1 to 8 and

n is the number 1 or 2,

either on their own or together with other additives known per se for the flotation of non-sulfidic valuable minerals, as collectors for the flotation of non-sulfidic valuable minerals.

7. The use claimed in claim 6, characterized in that, in general formula (I), $R^1$ is hydrogen, $R^2$ is a linear aliphatic $C_{12-16}$ alkyl radical, M may be Na, K or $NH_4$, m is an integer of 2 to 4 and n is the number 1 or 2.

8. The use claimed in claims 6 and 7, characterized in that mixtures of adducts corresponding to formula (I), for which n is the number 1 or 2, are used.

**Revendications**

1. Adducts d'acide phosphinique sur des hémiesters maléiques, et leurs sels, de formule générale (I)

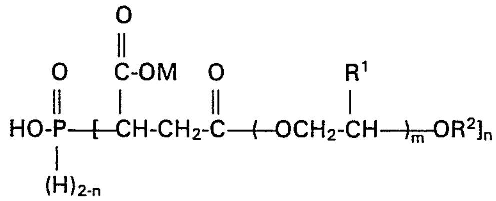 (I)

dans laquelle

$R^1$ représente un atome d'hydrogène ou un groupe méthyle,

$R^2$ représente un radical alkyle aliphatique ou cycloaliphatique, linéaire ou ramifié, ayant de 8 à 18 atomes de carbone, éventuellement substituée par un groupe hydroxyle, ou un radical aryle de formule

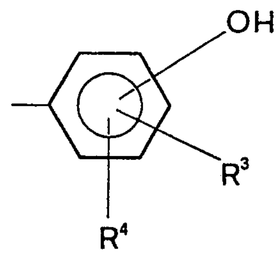

dans laquelle

$R^3$ et $R^4$ peuvent être identiques ou différents et représentent individuellement ou ensemble un atome d'hydrogène ou un radical alkyle linéaire ou ramifié ayant de 7 à 12 atomes de carbone, et

M peut représenter H, Na, K ou $NH_4$ et

m représente un nombre entier dans la plage de 1 à 8, et

n vaut 1 ou 2.

2. Adducts de formule générale (I), dans lesquels $R^1$ représente un atome d'hydrogène, $R^2$ représente un radical alkyle aliphatique linéaire ayant de 12 à 16 atomes de carbone, M peut représenter Na, K ou $NH_4$, m représente un nombre entier dans la plage de 2 à 4, et n vaut 1 ou 2.

3. Mélange d'adducts de formule générale (I) selon la revendication 1 ou 2, pour lesquels m vaut 1 ou 2.

4. Procédé pour la préparation d'adducts d'acide phosphinique sur des hémi-esters maléiques et de leurs sels, de formule générale (I)

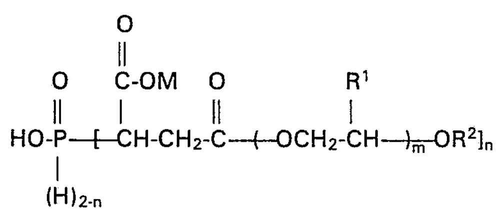 (I)

dans laquelle

$R^1$ représente un atome d'hydrogène ou un groupe méthyle,

$R^2$ représente un radical alkyle aliphatique ou cycloaliphatique, linéaire ou ramifié, ayant de 8 à 18 atomes de carbone, éventuellement substituée par un groupe hydroxyle, ou un radical aryle de formule

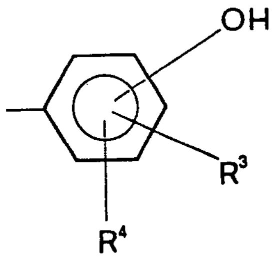

dans laquelle

$R^3$ et $R^4$ peuvent être identiques ou différents et représentent individuellement ou ensemble un atome d'hydrogène ou un radical alkyle linéaire ou ramifié ayant de 7 à 12 atomes de carbone, et
M peut représenter H, Na, K ou $NH_4$ et
m représente un nombre entier dans la plage de 1 à 8, et
n vaut 1 ou 2,

caractérisé en ce que

(a) on fait réagir des composés de formule générale

$R^2OH$

en rapport molaire 1 = m avec un epoxyde de formule

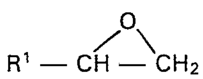

(b) on fair réagir les alkyl- ou alkylphénol-polyéthers de glycol résultants avec de l'anhydride maléique dans le rapport molaire 1 : 1, pour aboutir à des hémi-esters maléiques, et éventuellement on convertit ceux-ci en les sels de sodium, potassium ou ammonium correspondants, et
(c) on fixe de l'acide phosphinique par addition sur les composés résultants, en un rapport molaire ester : acide phosphinique allant de 1 à 2 : 1, ce par quoi on obtient des adducts de formule générale (I) ou des mélanges de ceux-ci, et
(d) on sépare éventuellement en leurs composants individuels, selon des méthodes connues en soi, les mélanges d'adducts formés.

5. Procédé selon la revendication 4, caractérisé en ce que

(a) on utilise des composés de formule générale

$R^2OH$

dans lesquels $R^2$ représente des radicaux alkyle ayant de 12 à 16 atomes de carbone, et on les fait réagir, en rapport molaire 1 : 2 à 4, avec de l'oxyde d'éthylène,
(b) on fait réagir les alkyl-polyester de glycol formés avec de l'anhydride maléique en rapport molaire 1 : 1, pour aboutir à des hémi-esters maléiques, et
(c) on fixe de l'acide phosphinique par addition sur les composés résultants, en rapport molaire ester : acide phosphinique égal à 1 : 1.

6. Utilisation des adducts d'acide phosphinique sur des hémi-esters maléiques, et de leurs sels, de formule générale (I)

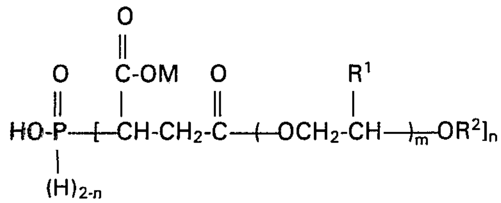 (I)

dans laquelle

$R^1$ représente un atome d'hydrogène ou un groupe méthyle,
$R^2$ représente un radical alkyle aliphatique ou cycloaliphatique, linéaire ou ramifié, ayant de 8 à 18 atomes de carbone, éventuellement substituée par un groupe hydroxyle, ou un radical aryle de formule

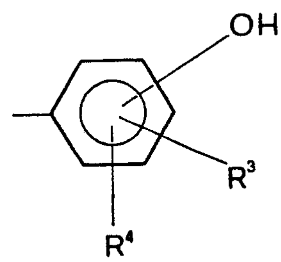

dans laquelle

$R^3$ et $R^4$ peuvent être identiques ou différents et représentent individuellement ou ensemble un atome d'hydrogène ou un radical alkyle linéaire ou ramifié ayant de 7 à 12 atomes de carbone, et
M peut représenter H, Na, K ou $NH_4$ et
m représente un nombre entier dans la plage de 1 à 8, et
n vaut 1 ou 2,

seuls ou avec addition d'autres additifs connus en soi pour la flottation de minéraux utiles non sulfurés, en tant que collecteurs pour la flottation de minéraux utiles non sulfurés.

7. Utilisation selon la revendication 6, caractérisée en ce que, dans la formule générale (I), $R^1$ représente un atome d'hydrogène, $R^2$ représente un radical alkyle aliphatique linéaire ayant de 12 à 16 atomes de carbone, M peut représenter Na, K ou $NH_4$, m représente un nombre entier dans la plage de 2 à 4 et n représente 1 ou 2.

8. Utilisation selon les revendications 6 et 7, caractérisée en ce que l'on utilise des mélanges d'adducts de formule (I), pour lesquels n vaut 1 ou 2.